# EUROPEAN PATENT APPLICATION

(11) **EP 3 699 850 A1**
(43) Date of publication of application: **26.08.2020**
(21) Application number: 19158096.8
(22) Date of filing: 19.02.2019
(51) Int. Cl.: G06Q 20/12, G06Q 20/32, G06Q 20/20, G06Q 20/36, G06Q 20/38, G06Q 20/40

(54) **SECURE REMOTE PAYMENT MECHANISM**

(71) Applicant: Mastercard International Incorporated, Purchase NY 10577 (US)
(72) Inventor: HAMDAN, Husham, Croydon, Surrey CR0 5BP (GB); VALENTI, Matteo, Dubai (AE); MAGRAY, Nazia, Dubai (AE); PIANEZZA, Anthony Joseph, London, NW8 0RA (GB); HASHMI, Umar, Dubai (AE)
(74) Representative: Lawrence, Richard Anthony

(57) **Abstract**

A method of obtaining a digital product or service at a computing device is described. The computing device has a service application for the digital product or service installed on it. The service application obtains a valid authentication from a user. The service application also obtains a request for the digital product or service from the user. After this, the service application prepares a transaction authorisation request comprising a payment application cryptogram. This payment application cryptogram comprises a customer verification from the valid authentication of the user and transaction details for authorisation and settlement of a transaction for the digital product or service through a transaction processing system. The service application provides the transaction authorisation request to the transaction processing system for authorisation and settlement. A suitable computing device is also described.

## Description

### TECHNICAL FIELD

The present disclosure relates to a secure remote payment mechanism. In particular, the disclosure relates to a payment mechanism which provides ease of use for consumers and security for all parties involved in a transaction.

### BACKGROUND

Payment cards such as credit cards and debit cards are very widely used for all forms of financial transaction. A typical payment card now contains an integrated circuit (making it a "chip card" or "smart card") which can be read by a smart card reader in a merchant POS (point of sale) terminal. Using this approach, a transaction is typically confirmed by a personal identification number (PIN) entered by the card user. Cards of this type typically operate under the EMV standard for interoperation of chip cards and associated apparatus (such as POS terminals and ATMs). ISO/IEC 7816 provides a standard for operation of cards of this type. Contactless payments are now possible between suitably enabled payment cards and merchant terminals by short range wireless technology using NFC protocols - under EMV, these are covered under the ISO/IEC 14443 standard. Payment cards and devices are provided under a transaction scheme (such as Mastercard, American Express or Visa) and the transaction mechanism is mediated by the transaction scheme infrastructure. EMV specifications relate to contact and contactless payment protocols and are publicly available at the EMVCo website (EMVCo is the industry body tasked with maintaining these specifications with the support of major transaction scheme providers) - https://www.emvco.com/document-search/ - and would readily be consulted by the person skilled in the art. Terminology relating to EMV technology not expressly defined in this document is referenced and defined in EMV specifications, as will be appreciated by the person skilled in the art.

Increasingly, transactions are made in a digital domain. Contactless payments may for example be performed by a mobile phone running a mobile payment application and communicating with a POS terminal using the same protocols as a contactless card. It is therefore now appropriate to refer to a "payment device" rather than a "payment card" (when one term is used below, it should be understood to extend to the other-"payment card" will generally be used for convenience). It is increasingly common, however, to transact with payment cards online, for example at a merchant website. Transactions will then be fed into the transaction scheme by a payment service provider providing an internet gateway to the merchant.

Online transactions have generally been treated as "Cardholder Not Present" (CNP) transactions (other examples would be credit card payments made by telephone), which create security issues as a full EMV protocol contact or contactless interaction may not be available and there is no proximity between payment card and POS terminal to provide an additional measure of security. A normal approach to providing additional customer verification is to provide a card verification code printed on the card. Additional technologies have also been developed to improve security and efficiency of transactions carried out in the digital domain - particularly relevant are tokenisation and the 3D Secure standard.

One approach used for management of transactions in the digital domain is tokenisation. This is a process carried out by which the card number is tokenised - replaced by another number, which is used in its place in digital transactions. This provides additional security for the payment card, and enables digital transactions to be performed efficiently. Tokenisation is carried out by the transaction scheme or an appropriate service provider with the permission of the payment card issuer (the issuing bank with which the cardholder has an account). Tokenised transactions are routed in the transaction scheme so that the PAN (primary account number) associated with the tokenised card can be recovered from a digital vault allowing normal processing of the transaction. Tokenisation is typically used for mobile payment applications, but is often not used in online transactions between a cardholder using their own personal computer and a merchant website.

3-D Secure is a technology developed to provide an additional security layer for online transactions. It is based on a three domain model (issuer domain, acquirer domain and interoperability domain), the domains representing the issuer bank associated with the cardholder, the acquirer bank associated with the merchant, and the interoperability domain. Existing versions of the 3-D Secure protocols typically involve creation of an in-line window to the issuer domain enabling the cardholder to authenticate himself or herself to the issuer (if necessary) using elements of a password. This protocol is under active development to provide more effective authentication options and additional benefits to the participating parties, but at present can be inconvenient to users, particularly at the initial registration stage.

It is desirable to further develop existing protocols for online transaction to provide greater security and effectiveness without compromising ease of use for the user. This is challenging, as in order to provide more effective security measures, additional steps may be necessary which affect the user experience. This may be a disincentive to the user to register for and participate in more secure online protocols. The present disclosure has been devised to mitigate or overcome at least some of the above-mentioned problems.

### SUMMARY OF THE DISCLOSURE

According to a first aspect of the present disclosure there is provided a method of obtaining a digital product or service at a computing device, the computing device having installed thereon a service application for the digital product or service, the method comprising at the computing device: the service application obtaining a valid authentication from a user; the service application obtaining a request for the digital product or service from the user; the service application preparing a transaction authorisation request comprising a payment application cryptogram, the payment application cryptogram comprising a customer verification from the valid authentication of the user and transaction details for authorisation and settlement of a transaction for the digital product or service through a transaction processing system; and the service application providing the transaction authorisation request to the transaction processing system for authorisation and settlement.

In embodiments, the transaction authorisation request relates to a tokenised payment card, wherein tokenisation of the card has taken place in registration of the payment card with the service application.

The payment application cryptogram may comprise information to establish that a valid payment card was used by the user and that the valid authentication authenticated the user as cardholder of the payment card.

In embodiments, obtaining valid authentication from a user may comprise obtaining a user biometric.

The digital product or service may comprise access to a digital service, or may comprise delivery of digital content.

According to a second aspect, the disclosure provides a computing device comprising a processor and a memory, the computing device having a service application installed thereon, wherein the service application is adapted for provision of a digital product or service, wherein when installed the service application is adapted to: obtain a valid authentication from a user; obtain a request for the digital product or service from the user; prepare a transaction authorisation request comprising a payment application cryptogram, the payment application cryptogram comprising a customer verification from the valid authentication of the user and transaction details for authorisation and settlement of a transaction for the digital product or service through a transaction processing system; and provide the transaction authorisation request to the transaction processing system for authorisation and settlement.

Such a transaction authorisation request may relate to a tokenised payment card, wherein tokenisation of the card has taken place in registration of the payment card with the service application.

The payment application cryptogram may comprise information to establish that a valid payment card was used by the user and that the valid authentication authenticated the user as cardholder of the payment card.

The computing device may be adapted to receive a biometric input, and obtaining valid authentication from a user may comprise obtaining a user biometric. Such a biometric input may comprise a fingerprint reader.

The computing device may also have a payment application installed thereon. Such a computing device may have a digital wallet application installed thereon for use in management of the payment application and the service application.

This computing device may be a mobile telephone handset.

In a third aspect, the disclosure provides an information storage means having a service application stored thereon, wherein the service application is adapted when installed on a computing device to perform the method of the first aspect described above.

### BRIEF DESCRIPTION OF THE DRAWINGS

One or more embodiments of the disclosure will now be described, by way of example only, with reference to the accompanying drawings, in which:
Figure 1 shows schematically a transaction system using the four-party model;
Figure 2 shows an implementation of the transaction system of Figure 1 adapted for performing embodiments of the disclosure;
Figure 3 shows elements of a transaction infrastructure to support digitised payments from a mobile device in more detail;
Figure 4 shows functional steps in an embodiment of the disclosure;
Figure 5 illustrates schematically elements of a mobile device in accordance with an embodiment of the disclosure;
Figure 6 illustrates a merchant registration process according to an embodiment of the disclosure;
Figure 7 illustrates a consumer registration process at a mobile device in accordance with an embodiment of the disclosure; and
Figure 8 illustrates a user payment process at a mobile device in accordance with an embodiment of the disclosure.

### DETAILED DESCRIPTION

General and specific embodiments of the disclosure will be described below with reference to the Figures.

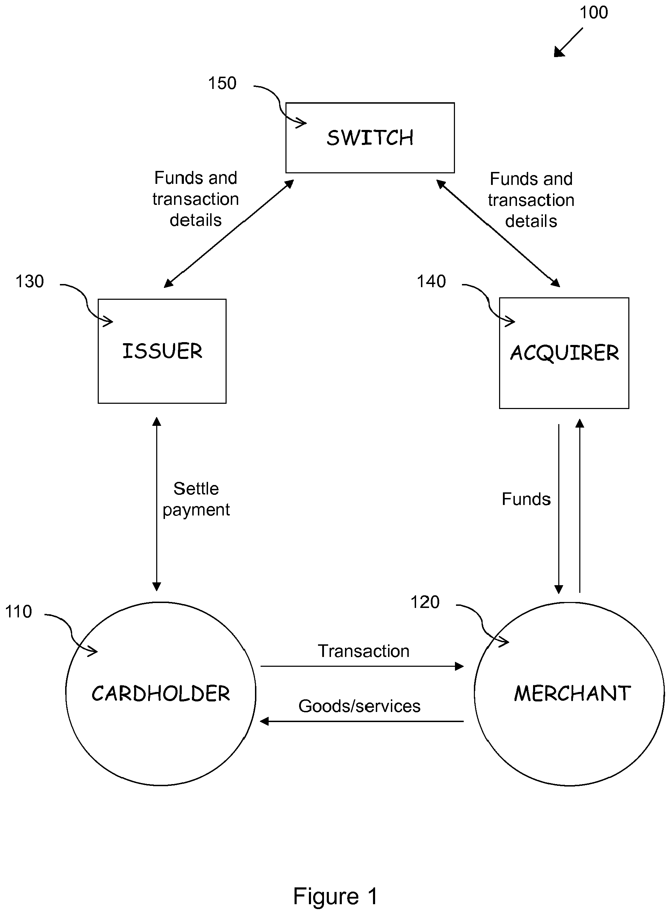

Figure 1 is a block diagram of a typical four-party model or four-party payment transaction scheme. The diagram illustrates the entities present in the model and the interactions occurring between entities operating in a card scheme.

Normally, card schemes - payment networks linked to payment cards - are based on one of two models: a three-party model or a four-party model (adopted by the present applicant). For the purposes of this document, the four-party model is described in further detail below.

The four-party model may be used as a basis for the transaction network. For each transaction, the model comprises four entity types: cardholder 110, merchant 120, issuer 130 and acquirer 140. In this model, the cardholder 110 purchases goods or services from the merchant 120. The issuer 130 is the bank or any other financial institution that issued the card to the cardholder 110. The acquirer 140 provides services for card processing to the merchant 120.

The model also comprises a central switch 150 - interactions between the issuer 130 and the acquirer 140 are routed via the switch 150. The switch 150 enables a merchant 120 associated with one particular bank acquirer 140 to accept payment transactions from a cardholder 110 associated with a different bank issuer 130.

A typical transaction between the entities in the four-party model can be divided into two main stages: authorisation and settlement. The cardholder 110 initiates a purchase of a good or service from the merchant 120 using their card. Details of the card and the transaction are sent to the issuer 130 via the acquirer 140 and the switch 150 to authorise the transaction. The cardholder 110 may have provided verification information in the transaction, and in some circumstances may be required to undergo an additional verification process to verify their identity (such as 3-D Secure in the case of an online transaction). Once the additional verification process is complete the transaction is authorised.

On completion of the transaction between the cardholder 110 and the merchant 120, the transaction details are submitted by the merchant 120 to the acquirer 140 for settlement.

The transaction details are then routed to the relevant issuer 130 by the acquirer 140 via the switch 150. Upon receipt of these transaction details, the issuer 130 provides the settlement funds to the switch 150, which in turn forwards these funds to the merchant 120 via the acquirer 140.

Separately, the issuer 130 and the cardholder 110 settle the payment amount between them. In return, a service fee is paid to the acquirer 140 by the merchant 120 for each transaction, and an interchange fee is paid to the issuer 130 by the acquirer 140 in return for the settlement of funds.

In practical implementations of a four-party system model, the roles of a specific party may involve multiple elements acting together. This is typically the case in implementations that have developed beyond a contact-based interaction between a customer card and a merchant terminal to digital implementations using proxy or virtual cards on user computing devices such as a smart phone.

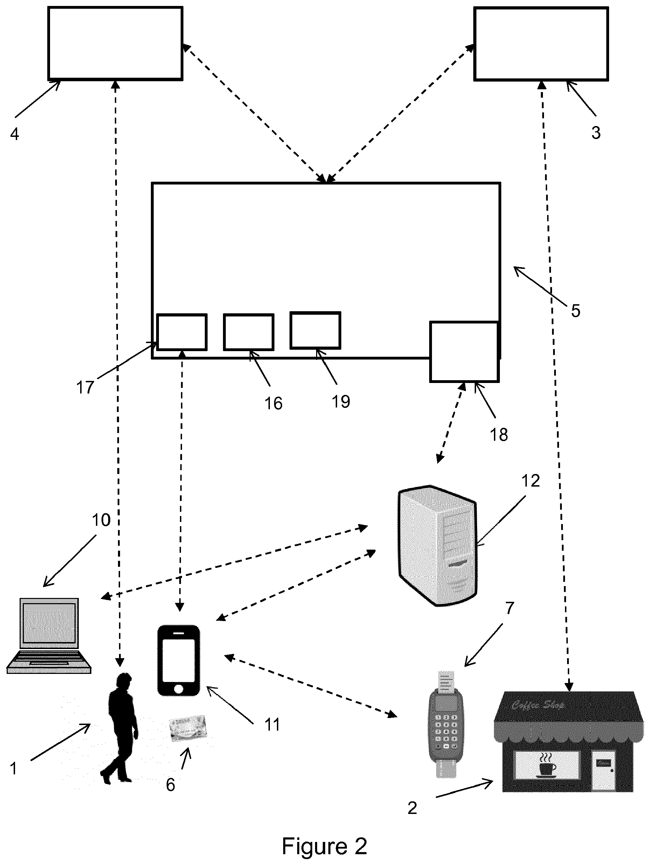

Figure 2 shows an architecture according to an embodiment of the disclosure appropriate for interaction between a cardholder and a merchant. This Figure shows a general purpose architecture for reference, but shows in particular elements of an architecture used when a cardholder carries out an online transaction with a merchant server.

For a conventional transaction, a cardholder will use their payment card 6 - or a mobile computing device such as smartphone 11 adapted for use as a contactless payment device - to transact with a POS terminal 7 of a merchant 2. However, in embodiments relevant to the present invention, the cardholder will use his or her computing device - which may be any or all of a cellular telephone handset, a tablet, a laptop, a static personal computer or any other suitable computing device (here alternative computing devices are shown - cellular telephone handset or smartphone 11 and laptop computer 10 - and other computing devices such as a smart watch or other wearable device may also be used) - to act either as a proxy for a physical payment card 6 or as a virtual payment card operating only in a digital domain. The smartphone 11 may achieve this with a mobile payment application and a digital wallet, as described below. The smart phone 11 can use this to transact with a merchant POS terminal 7 using NFC or another contactless technology, or to make a payment in association with its wallet service as discussed below. However, online transactions with a merchant are of particular interest in connection with embodiments of the disclosure, rather than contact or contactless transactions with a merchant POS terminal 7. To make an online transaction, the smartphone 11 may also be able to interact with a merchant server 12 representing the merchant 2 over any appropriate network connection, such as the public internet - the connection to the merchant may be provided by an app or application on the computing device, as will be discussed below.

The transaction processing system (also here termed transaction scheme infrastructure, payment network or transaction infrastructure) 5 here provides not only the computing infrastructure necessary to operate the card scheme and provide routing of transactions and other messaging to parties such as the acquirer 3 and the issuer 4, but also a wallet service 17 to support a digital wallet on the cardholder computing device, and an internet gateway 18 to accept internet based transactions for processing by the transaction infrastructure. In other embodiments, the wallet service 17 may be provided similarly by a third party with an appropriate trust relationship with the transaction scheme provider. To support tokenisation, a token service provider 19 is present (again, this is shown as part of transaction infrastructure 5 but may be provided by a third party with appropriate trust relationships), and the transaction scheme infrastructure provides a digital enablement service 16 to support the performance of tokenised digital transactions, and to interact with other elements of the system to allow transactions to be performed correctly - this digital enablement service may include other elements, such as token service provision.

For a tokenised transaction, the transaction is validated in the transaction scheme by mapping the cardholder token to their card PAN, checking the status of the token (to ensure that it is in date and otherwise valid) and any customer verification approach used. This allows the issuer to authorise the transaction in the normal manner.

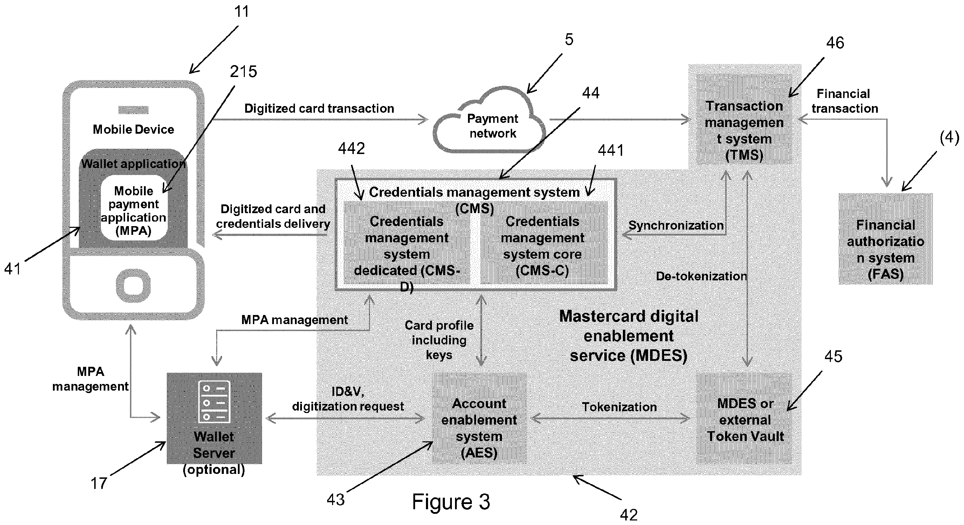

Figure 3 shows elements of a transaction infrastructure to support digitised payments from a mobile device in more detail. This Figure shows as a specific example the applicant's Mastercard Cloud Based Payment (MCBP) architecture - this is exemplary rather than specific to the invention, and illustrates how the architecture is used to support a mobile payment application 215 on a mobile device (such as smartphone 11) - here the mobile payment application 215 is shown as contained within a wallet application or digital wallet 41. Such a digital wallet 41 may communicate with a wallet server 17 to allow management of the mobile payment application, and it also can be used to request digitization of a payment card 6 to be used by the mobile device 11.

The Mastercard Digital Enablement Service (MDES) 42 performs a variety of functions to support mobile payments and digitized transactions. As indicated above, the MDES 42 is exemplary only, and is not essential to the invention - other embodiments may use digitisation, tokenisation and provisioning services associated with other transaction processing infrastructures, for example. The MDES 42 may be considered a part of the transaction procssing system 5, though it is broken out as a separate element in Figure 3. The wallet server 17 is not a part of the MDES 42 - and need not be present, for example if the mobile payment application 215 is not embedded within a digital wallet 41 - but acts as an interface between the mobile device 11 and the MDES 42. The MDES 42 also mediates tokenised transactions so that they can be processed through the transaction scheme as for conventional card transactions. The following functional elements shown within the MDES 42: the Account Enablement System (AES) 43, the Credentials Management System (CMS) 44, the Token Vault 45, and the Transaction Management System (TMS) 46. These will be described briefly below.

The Account Enablement System (AES) 43 is used in card digitisation and user establishment. It will interact with the mobile payment application (here through the wallet server 17) for card digitisation requests, and will populate the Token Vault 45 on tokenisation and wil interact with the CMS 44 to establish a card profile with associated keys for digital use of the card.

The Credentials Management System (CMS) 44 supports management of cardholder credentials, and is a key system within the MDES 42. The core system 441 manages synchronisation with the transaction system as a whole through interaction with the TMS 46 and manages the channel to the AES 43. The dedicated system 442 provides delivery of necessary elements to the mobile payment application such as the digitized card and credentials and keys in the form needed for use. This system may also interact with the wallet server 17 for management of the mobile payment application.

The Token Vault 45 - which is shown here as within the MDES 42, but which may be a separate element under separate control - is the repository for token information including the correspondence between a token and the associated card. In processing tokenised transactions, the MDES 42 will reference the Token Vault 45, and tokenisation of a card will result in creation of a new entry in the Token Vault 45.

Transaction Management System (TMS) 46 is used when processing tokenised transactions. If a transaction is identified by the transaction processing system 5 as being tokenised, it is routed to the TMS 46 which detokenises the transaction by using the Token Vault 45. The detokenised transaction is then routed to the issuer (here represented by Financial Authorisation System 47) for authorisation in the conventional manner. The TMS 46 also interacts with the CMS 44 to ensure synchronisation in relation to the cardholder account and credentials.

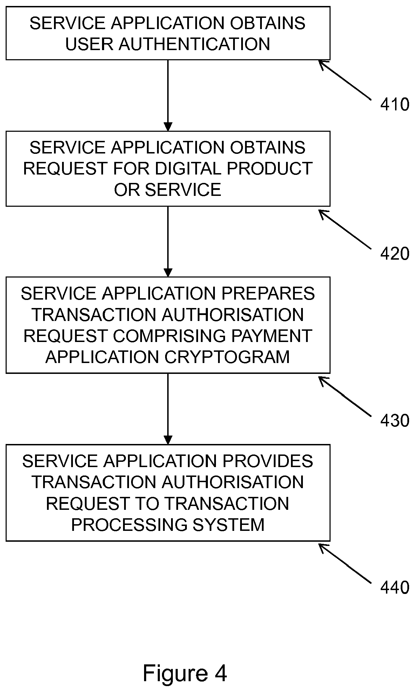

Figure 4 shows functional steps in an embodiment of the disclosure. Figure 4 shows a method of obtaining a digital product or service at a computing device. In exemplary embodiments discussed below, this is a mobile computing device such as smartphone 11. There is a service application - such as a merchant app, or application - for the digital product or service installed on the computing device. The following steps take place at the computing device.

The service application obtains 410 a valid authentication from a user. In this case, the user is also a cardholder of a payment card, and the authentication action also serves as a cardholder verification action.

The service application obtains 420 a request for the digital product or service from the user. This may be at a checkout screen or in some other manner appropriate to the service application interface.

The service application prepares 430 a transaction authorisation request comprising a payment application cryptogram. In embodiments, this payment application cryptogram is provided in accordance with EMV specifications so that it can be processed directly by a transaction scheme operating in accordance with EMV specifications. The payment application cryptogram may here comprise a customer verification derived from the valid authentication of the user together with transaction details for authorisation and settlement of a transaction for the digital product or service through a transaction processing system.

The service application then provides 440 the transaction authorisation request to the transaction processing system for authorisation and settlement. Success or failure of the transaction will then be communicated back to the service application, which presents the results (and provides the digital product or service) to the user.

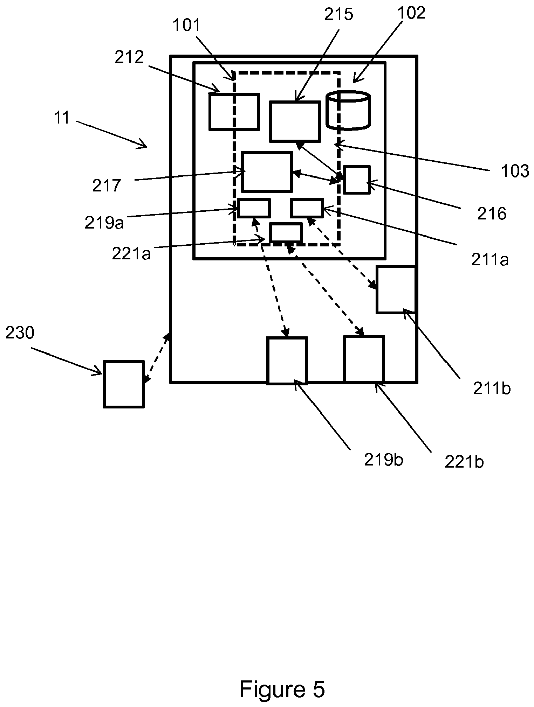

Figure 5 illustrates schematically a mobile phone configured for implementing such an embodiment of the disclosure. The cardholder is equipped with one or more physical payment cards 6 and a computing device, in this case a mobile telephone 1. As shown in Figure 5, the computing device in this embodiment has a wireless communication capability 211 (shown as provided by a combination of NFC application software 211a and hardware 211b), here allowing the mobile computing device to communicate by NFC protocols and in embodiments also by 802.11 wireless networking technologies - this or another networking capability (such as cellular telephony capability 219 - shown as provided by a combination of a telephony application 219a and hardware 219b) may be used to communicate with remote computing devices over an appropriate network connection. The computing device has a processor 101 and a memory 102, between them defining a computing environment 103 in which applications can run. The computing device may also comprise a biometric input device 221b such as a fingerprint scanner with an associated biometric application 221a that can be used by other applications. In embodiments of the disclosure, these include a payment application 215 adapted to connect with communication channels to make payments - this may be embedded within a wallet application, or digital wallet, as shown in Figure 3. The payment application 215 is also connected to a cryptographic element 216 capable of performing cryptographic processes such as generation of a new cryptographic key. This cryptographic element may be physically and/or logically protected to prevent subversion - a mobile telephone SIM card is a cryptographic elements of this type. In other embodiments, the cryptographic element 216 may be a functionality provided by software of the mobile device (for example, its operating system or the payment application itself). In this case, there is also a service application 217 - in this case, a merchant application - provided with a cryptographic capability and adapted to communicate with the cryptographic element 216. Both the payment application 215 and the service application 217 are adapted for online communication. The service application 217 may have been provided as a downloadable application to allow the user of the mobile phone 11 to transact and otherwise interact with a merchant 2 through a merchant server 12, or may be provided on an information storage means 230 such as a memory card or other storage mechanism suitable for reading with a mobile device. If provided in this form, a registration or initialisation process may be required after installation to establish trust and trusted communication between the merchant server 12 and the mobile telephone 1. As will be described below, for implementing the embodiment the merchant application 217 has been provided with certain functionality normally found only in the payment application 215.

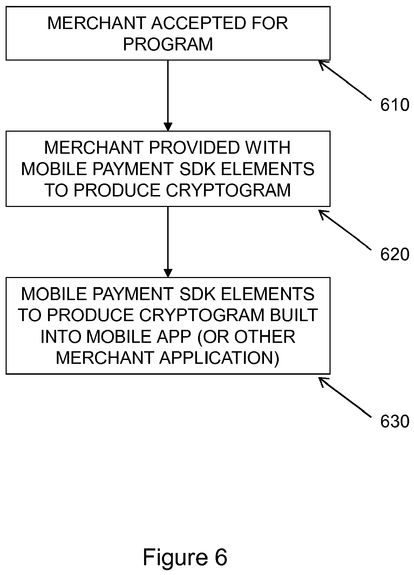

Figure 6 illustrates a merchant registration process according to an embodiment of the disclosure. First of all the merchant is accepted 610 into the process, and allocated appropriate identifiers. In this case, one identifier is provided to indicate that the merchant is providing cryptograms within a merchant app, and another identifier is used to identify the specific merchant in the program. This allows for a merchant and device specific token to be created, and creates no additional complexity for issuers in subsequent transaction authorisation.

After this the relevant elements of a Mobile Payment SDK used in constructing a payment application are made available 620 to the merchant so that these can be built into the merchant app 630. Alternatively, relevant specification elements may be provided to the merchant under license to allow the merchant to build the relevant functionality into the merchant app. This provides the merchant app with the capability to create a cryptogram according to EMV standards. Such a Mobile Payment SDK is typically provided by a transaction scheme provider to payment application providers to allow payment applications to be constructed compliant with that transaction scheme (for example, for Mastercard Cloud-Based Payments applications through https://developer.mastercard.com/product/mobile-payments-sdk). In this case, the relevant elements of the Mobile Payment SDK are those which allows the mobile payment application to construct a Application Cryptogram for processing by the transaction scheme. Generation of an Application Cryptogram - such as an Authorization Request Cryptogram (ARQC) to request online approval of a transaction by an issuer - is fully defined under EMV specifications (in particular Book 3 - EMV Book 3 - Application Specification - version 4.3, which may be found at https://www.emvco.com/document-search/?action=search_documents&publish_date=&emvco_document_version=4-3&emvco_document_book=&px_search=). For the present applicant, this may be to allow Digital Secure Remote Payment (DSRP) transactions to be performed using the merchant app - this requires the ability to construct a remote payment transaction using EMV cryptograms. While this would normally only be possible with a mobile payment application (MPA), in embodiments according to the present disclosure this is achieved within a service application such as a merchant app by including EMV payment capability within the merchant app (in this embodiment by inclusion of relevant parts of the Mobile Payment SDK in the service application) with authentication of the cardholder when initiating a remote payment transaction.

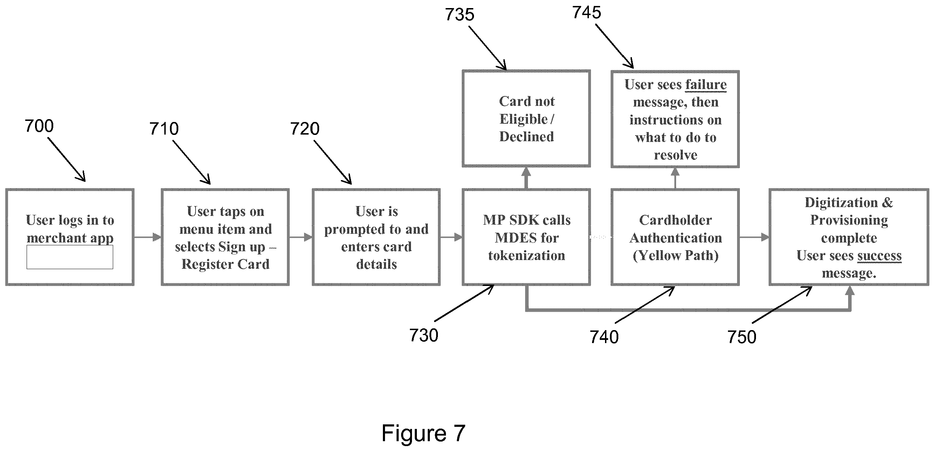

Figure 7 illustrates a consumer registration process at a mobile device in accordance with an embodiment of the disclosure. The user logs in 700 to the merchant app in the normal manner, and then selects 710 "Sign up - Register card" from the menu. The user enters card details 720 (such as the Primary Account Number and any other information required for card registration) in the same manner as would be carried out for a payment application. The merchant app then communicates 730 with the digitisation, tokenisation and provisioning service (for example, MDES) to request tokenisation of the card in the normal manner. If the card is declined 735 for tokenisation - if, for example, it is in a card category that the issuer does not accept for tokenisation, or if the issuer will not allow that cardholder to have a tokenised card - the process will stop here. If this step is successful, then digitization and provisioning is completed 750 and the user is provided with a success message. An intermediate result may be obtained, in which case cardholder authentication 740 will be needed and there may be a failure message 745 with indications given to the cardholder as to how to resolve the situation. Success leads to completed digitization and provisioning 750 as before. This process is broadly similar to registration and digitization of a new card on a payment application.

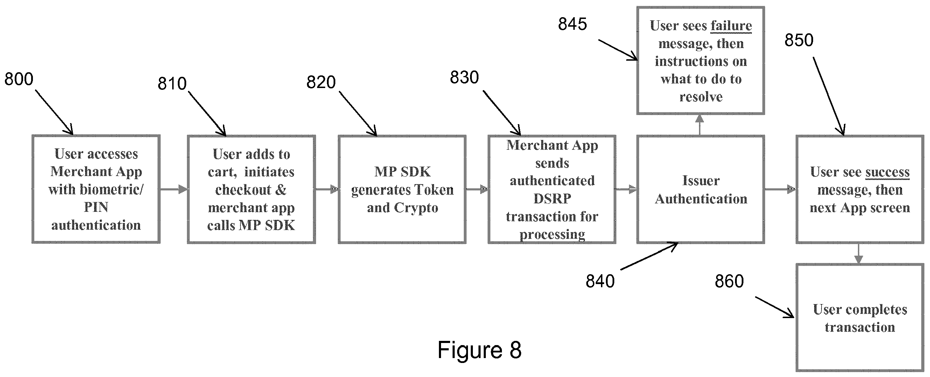

Figure 8 illustrates a user payment process at a mobile device in accordance with an embodiment of the disclosure. The user/cardholder may access 800 the merchant app using an appropriate authentication method - this may be a biometric, or may be a PIN (or password, or pattern). Where the mobile device comprises a fingerprint scanner, then a user fingerprint is a logical choice of biometric for this purpose. The user populates the card and checks out in the normal way, at which point the merchant app accesses 810 the Mobile Payment SDK which obtains a token (or uses a previously provisioned token) and generates 820 a cryptogram (in accordance with EMV specifications). The token is obtained from the relevant service in the transaction infrastructure (such as MDES) - card details and anything else required for digitisation and tokenisation are provided to the relevant back end system by the merchant app, and the relevant back end system then provisions the token if the issuer is satisfied (as for conventional tokenisation processes). This allows the merchant app to provide all the elements of an authenticated Digital Secure Remote Payment (DSRP) transaction 830 for processing by the transaction system in the normal way. This proceeds - through the normal steps involved in processing of a tokenised transaction - to issuer authentication 840. If this fails 845 a failure message is provided to the merchant app (with an indication of how the failure may be resolved), but if it succeeds 850 then the merchant app moves to a success screen and the transaction completes 860.

This approach can be used in a number of practical contexts. A particularly significant one is purchase of mobile phone credit. In this case, the service application may be a mobile phone operator merchant application, and the user action may be used to purchase more phone credit. Another context may be the provision of gaming credit as a better-controlled alternative to existing approaches to in-app purchase. Another may be for direct purchase of digital content - such as music, films or books.

Many modifications may be made to the above examples without departing from the scope of the present disclosure as defined in the accompanying claims.

## Claims

1. A method of obtaining a digital product or service at a computing device, the computing device having installed thereon a service application for the digital product or service, the method comprising at the computing device:
the service application obtaining a valid authentication from a user;
the service application obtaining a request for the digital product or service from the user;
the service application preparing a transaction authorisation request comprising a payment application cryptogram, the payment application cryptogram comprising a customer verification from the valid authentication of the user and transaction details for authorisation and settlement of a transaction for the digital product or service through a transaction processing system; and
the service application providing the transaction authorisation request to the transaction processing system for authorisation and settlement.

2. The method of claim 1, wherein the transaction authorisation request relates to a tokenised payment card, wherein tokenisation of the card has taken place in registration of the payment card with the service application.

3. The method of claim 1 or claim 2, wherein the payment application cryptogram comprises information to establish that a valid payment card was used by the user and that the valid authentication authenticated the user as cardholder of the payment card.

4. The method of any preceding claim, wherein obtaining valid authentication from a user comprises obtaining a user biometric.

5. The method of any preceding claim, wherein the digital product or service comprises access to a digital service.

6. The method of any of claims 1 to 4, wherein the digital product or service comprises delivery of digital content.

7. A computing device comprising a processor and a memory, the computing device having a service application installed thereon, wherein the service application is adapted for provision of a digital product or service, wherein when installed the service application is adapted to:
obtain a valid authentication from a user;
obtain a request for the digital product or service from the user;
prepare a transaction authorisation request comprising a payment application cryptogram, the payment application cryptogram comprising a customer verification from the valid authentication of the user and transaction details for authorisation and settlement of a transaction for the digital product or service through a transaction processing system; and
provide the transaction authorisation request to the transaction processing system for authorisation and settlement.

8. The computing device of claim 7, wherein the transaction authorisation request relates to a tokenised payment card, wherein tokenisation of the card has taken place in registration of the payment card with the service application.

9. The computing device of claim 7 or claim 8, wherein the payment application cryptogram comprises information to establish that a valid payment card was used by the user and that the valid authentication authenticated the user as cardholder of the payment card.

10. The computing device of any of claims 7 to 9, wherein the computing device is adapted to receive a biometric input, and obtaining valid authentication from a user comprises obtaining a user biometric.

11. The computing device of claim 10, wherein the biometric input comprises a fingerprint reader.

12. The computing device of any of claims 7 to 11, wherein the computing device also has a payment application installed thereon.

13. The computing device of claim 12, wherein the computing device has a digital wallet application installed thereon for use in management of the payment application and the service application.

14. The computing device of any of claims 7 to 13, wherein the computing device is a mobile telephone handset.

15. An information storage means having a service application stored thereon, wherein the service application is adapted when installed on a computing device to perform the method of any of claims 1 to 6.
